# EUROPÄISCHE PATENTSCHRIFT

(11) **EP 0 519 114 B1**
(45) Veröffentlichungstag und Bekanntmachung des Hinweises auf die Patenterteilung: **19.10.1994**
(21) Anmeldenummer: 91110316.6
(22) Anmeldetag: 21.06.1991
(51) Int. Cl.: A01K 5/02

(54) **Verfahren und Fütterungseinrichtung zum Zubereiten und Zuführen von pumpfähigem Viehfutter zu Verbraucherstellen**
Method and feeding apparatus for the preparation and the distribution to mangers of pumpable animal fodder
Procédé et dispositif de préparation et de distribution à des auges d'aliment semi-liquide pour animaux

(43) Veröffentlichungstag der Anmeldung: 23.12.1992
(73) Patentinhaber: WEDA-DAMMANN & WESTERKAMP GmbH, D-49424 Goldenstedt (DE)
(72) Erfinder: Fahlbusch, Klaus, W-2848 Vechta i.Old. (DE)
(74) Vertreter: Busse & Busse Patentanwälte

(56) Entgegenhaltungen:
- EP-A- 0 126 240
- EP-A- 0 296 260
- DE-A- 3 419 842

## Beschreibung

Die Erfindung bezieht sich auf ein Verfahren zum Zubereiten und Zuführen von pumpfähigem Viehfutter zu Verbraucherstellen gemäß dem Oberbegriff des Anspruchs 1.

Bei einem bekannten Verfahren (DE-A-34 19 842) zum Zubereiten und Zuführen von pumpfähigem Viehfutter zu Verbraucherstellen wird eine erste Futtermischung mit einer ersten Rezeptur in einem Wiegemischbehälter zubereitet und aus diesem durch eine Vorlaufleitung und eine von dieser beaufschlagte Verbraucherleitung portionsweise an nacheinander freigebbaren Abzweigungen an Verbraucherstellen abgegeben. Nach Beendigung der Abgabe der Futtermischung mit der ersten Rezeptur kann dann im gleichen Mischbehälter eine zweite Futtermischung mit einer zweiten Rezeptur zubereitet und danach ebenfalls an Verbraucherstellen abgegeben werden.

Dabei wird eine Verdrängerflüssigkeit, z. B. Wasser, verwendet, welche die futterführenden Rohrleitungen vor Beginn und nach Abschluß eines Fütterungsvorganges füllt. Bei Beginn des Förderung von Futter aus dem Wiegemischbehälter in die Vorlaufleitung verdrängt die Futtersäule fortschreitend die Verdrängerflüssigkeit, die gesammelt und nach Entleerung des Wiegemischbehälters in diesen überführt wird, um nunmehr bei weiterer Förderung die Futtersäule zu verdrängen, bis diese praktisch restlos an Verbraucherstellen abgegeben ist.

Verdrängerflüssigkeit und Futter können bei ihrer Förderung im Rohrleitungssystem unmittelbar aneinandergrenzen. Bevorzugt werden jedoch Verdrängerflüssigkeit und Futter durch Trennkörper getrennt (EP-A-0 296 260), die in den futterführenden Rohrleitungen axial verschieblich und gegen die Rohrwandung abgedichtet sind.

Das Verdrängen von Futter durch Verdrängerflüssigkeit und umgekehrt wird jeweils durch ein vom Druck einer Förderpumpe abgeleitetes hydraulisches Druckgefälle herbeigeführt, dessen Erzeugung durch eine computergesteuerte elektronische Schalteinheit als zentrale Prozeßsteuerung veranlaßt wird.

Ein derartiges Verfahren ermöglicht die Zuordnung einer Futtermischung mit einer ersten Rezeptur zu Verbraucherstellen, die zu einer vorbestimmten ersten Gruppe von Verbraucherstellen gehören, und die Zuordnung einer Futtermischung mit einer zweiten Rezeptur zu einer zweiten Gruppe von Verbraucherstellen. Dabei kann die Menge einer an einer Verbraucherstelle abgegebenen Futterportion jeweils beliebig bestimmt und beispielsweise an die Zahl und das Alter der an einer Verbraucherstelle gefütterten Tiere angepaßt werden.

Bei einem Verfahren gemäß einem älteren Vorschlag (deutsche Patentanmeldung P 43 40 450.1-23) besteht bereits die Möglichkeit, neben der Vorbestimmung der Menge jeder abgegebenen Futterportion auch deren Zusammensetzung aus zwei Futtermischungen unterschiedlicher Rezeptur vorzubestimmen. Bei diesem bekannten Verfahren werden zwei Futtermischungen unterschiedlicher Rezeptur zubereitet und durch eine Verbraucherleitung mit entgegengesetzter Förderrichtung zu wahlweise nacheinander freigebbare Abzweigungen zu Verbraucherstellen gefördert. An jeder Verbraucherstelle wird dann eine Futterteilportion der Futtermischung mit erster Rezeptur und unmittelbar darauf oder gleichzeitig eine weitere Futterteilportion der Futtermischung mit zweiter Rezeptur ausgegeben. Beide Teilportionen vermischen sich durch den Ausgabevorgang zu einer Gesamtportion mit der gewünschten Zusammensetzung aus Anteilen beider Futtermischungen. Das Mischungsverhältnis kann beliebig gewählt werden und auch den Grenzfall einschließen, bei der die Gesamtportion jeweils lediglich aus einer Futtermischung einer einzigen Rezeptur besteht.

Der Erfindung liegt die Aufgabe zugrunde, ein Verfahren der eingangs genannten Art zu schaffen, das hinsichtlich der Möglichkeiten zur Veränderung der Zusammensetzung von Futterportionen weiter verbessert ist. Die Erfindung löst diese Aufgabe durch das Verfahren gemäß Anspruch 1.

Das erfindungsgemäße Verfahren ermöglicht es, jeder Futterportion eine Zusammensetzung vorzugeben, die frei auf der Grundlage der verfügbaren Futtermittel bestimmbar ist. Dabei kann die individuelle Zusammensetzung jeder Futterportion vor jedem Fütterungsvorgang beliebig bestimmt und auf diese Weise eine Fütterung verwirklicht werden, bei der Tiere ein den Zusammensetzungs- und den Mengenbedürfnissen ihres jeweiligen Alters exakt angepaßtes Futter erhalten.

Eine bevorzugte Ausführung des erfindungsgemäß Verfahrens sieht vor, daß Futtervormischungen unterschiedlicher Grundrezeptur zubereitet und die Futterportionen aus Teilmengen unterschiedlicher Vormischungen zusammengesetzt werden, wobei die Teilmengen für jede Futterportion fortschreitend und dabei zumindest phasenweise gleichzeitig den jeweiligen Vormischungen entnommen und in einer Mischleitung zusammengeführt werden, die in die Verbraucherleitung mündet.

Eine derartige Ausgestaltung des Verfahrens ist insbesondere für die Anwendung in großen Tierbeständen geeignet und kann mit Futtermischungen betrieben werden, deren Bestandteile nach einem Zusammenmischen noch einer Verweilzeit, z.B. für ein enzymatisches Aufschließen, bedürfen. Ein derartiges Verfahren kommt zu seiner Durchführung mit einem verhältnismäßig geringen apparativen Aufwand aus, wenn von den für einen Einsatz bei einem Fütterungsvorgang vorgesehenen Vormischungen lediglich zwei zumindest phasenweise gleichzeitig zubereitet und für eine Entnahme von Teilmengen vorgehalten werden, und wenn weitere Vormischungen unterschiedlicher Rezeptur phasenweise versetzt jeweils nach Aufbrauch einer der Vormischung zubereitet und zusammen mit dem noch unverbrauchten Teil der anderen Vormischung oder nach deren Aufbrauch mit einer nachfolgend zubereiteten weiteren Vormischung zur Futterportionsbildung herangezogen wird. Dabei erlaubt das Verfahren eine Mehrphasenfütterung der Tiere unter Heranziehung einer grundsätzlich beliebigen Anzahl von Futtervormischungen, die jeweils in zeitlichem Versatz zubereitet und ausgegeben werden.

Der Erfindung liegt ferner die Aufgabe zugrunde, eine baulich einfache Fütterungseinrichtung zum Zubereiten und Zuführen von pumpfähigem Viehfutter zu Verbraucherstellen zu schaffen, die es ermöglicht, Viehbestände nach einer optimierten Quantitäts- und Qualitäts-Futterkurve zu füttern und hierzu für jeden Fütterungsvorgang Futterportionen zu erzeugen und auszugeben, die je Verbraucherstelle individuell in Menge und Zusammensetzung in einem weiten Variationspektrum vorgebbar sind. Die Erfindung löst diese Aufgabe durch eine Fütterungseinrichtung mit den Merkmalen des Anspruchs 12. Hinsichtlich weiterer Ausgestaltungen wird auf die Ansprüche 13 bis 22 verwiesen.

Wie schon die Fütterungseinrichtung nach dem genannten älteren Vorschlag, gestattet die Fütterungseinrichtung nach der Erfindung schon mit zwei Wiegemeßbehältern einen in weiten Grenzen hinsichtlich der Mengengestaltung und Zusammensetzung von Futterportionen variablen Betrieb, bei dem die Futterportionen vor einem Eintritt in die Verbraucherleitung fertig zubereitet, in einer Futtersäule aneinandergereiht und zu ihren vorbestimmten Verbraucherstellen transportiert und abgegeben werden. Die Fütterungseinrichtung kommt dabei mit einem besonders einfachen Rohrleitungssystem aus und arbeitet mit einer einzigen Futtersäule, die durch nur zwei Verdrängerkörper abgrenzbar ist.

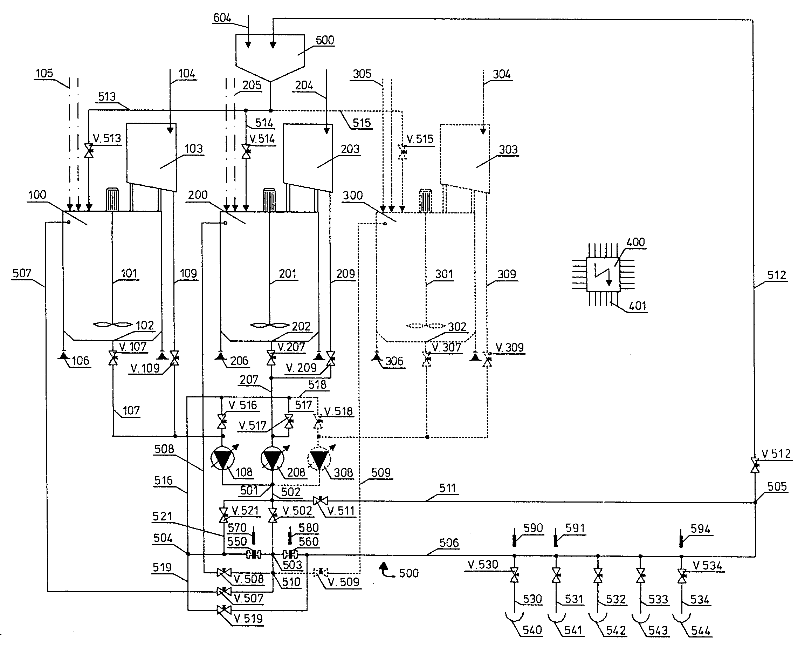

Weitere Einzelheiten und Vorteile von Verfahren und Fütterungseinrichtung nach der Erfindung ergeben sich aus der nachfolgenden Beschreibung und der Zeichnung, die in schematischer Darstellung eine Fütterungseinrichtung gemäß der Erfindung veranschaulicht.

Die dargestellte Ausführung einer erfindungsgemäßen Fütterungseinrichtung weist in der in ausgezogenen Linien veranschaulichten Grundausführung eine Futterzubereitungsstation mit zwei Wiegemischbehältern 100,200 auf. In gepunkteten Linien ist eine Ergänzung der Futterzubereitungsstation um einen weiteren Wiegemischbehälter 300 samt zugehörigen Aggregaten und Rohrleitungen dargestellt.

Die Zahl der zur Verwendung kommenden Wiegemischbehälter ist theoretisch nach oben hin nicht begrenzt, wird jedoch aus praktischen Erwägungen stets möglichst klein gehalten werden und im Regalfalle eine Anzahl von 10 nicht überschreiten. Für die Anzahl der Wiegemischbehälter mitbestimmend ist dabei die Frage, in welchen Verfahrensablauf die Futterzubereitungsstation eingebunden wird, insbesondere ob in ihnen einzelne Futterportionen gemischt und nach dem Zubereitungsvorgang weitergefördert werden, oder ob sie zum Zubereiten von Vormischungen mit unterschiedlichen Rezeptur eingesetzt werden, deren Menge - wenn möglich - so bemessen ist, daß sie für die Durchführung eines Fütterungsvorganges ausreicht. Nach dieser Einbindung bemißt sich auch ihre Größe, die im Falle des dargestellten Beispiels auf die Aufnahme von Vormischungen unterschiedlicher Rezepturen abgestimmt ist.

Jeder Wiegemischbehälter 100,200,300 umfaßt ein Rührwerk 101,201,301, einen Bodenauslaß 102,202,302 sowie einen fest aufgesattelten Zusatzbehälter 103,203,303. Jeder dieser Zusatzbehälter dient zur Aufnahme von Frischwasser in vorgegebener Menge und ist über eine Versorgungsleitung 104,204,304 mit Frischwasser beschickbar.

Zur Zuführung von Futterbestandteilen zu den Wiegemischbehältern sind Futterzuleitungen 105,205,305 in einer Anzahl vorgesehen, die davon abhängt, wieviele verschiedene Futterbestandteile im einzelnen verarbeitet und aus nicht näher dargestellten Silos heranzuführen sind.

Die Wiegemischbehälter 100,200,300 stützen sich auf Meßwertaufnehmern 106,206,306 von Wiegevorrichtungen ab, die ihre Meßdaten an eine computergesteuerte zentrale Schalteinheit 400 für die Steuerung sämtlicher Aggregate der Fütterungseinrichtung übergeben. Diese zentrale Schalteinheit 400 vollzieht eine programmierbare Prozeßsteuerung und ist über nur schematisch dargestellte Anschlußleitungen 401 mit sämtlichen Aggregaten und Meßwertaufnehmern der Fütterungseinrichtung.

An den Bodenauslauf 102,202,302 der Wiegemischbehälter 100,200,300 schließt sich jeweils eine Vorlaufleitung 107,207,307 an, in die jeweils eine Förderpumpe 108,208,308 eingeschaltet ist. Die Vorlaufleitungen 107,207,307 münden stromab ihrer Förderpumpen 108,208,308 an einer gemeinsamen Mündungsstelle 501 in eine Bestandteil eines nachgeordneten Rohrleitungssystems 500 bildende Mischleitung 502 ein, die bei 503 in eine sich zwischen den Endpunkten 504 und 505 erstreckende Verbraucherleitung 506 ausmündet.

Jeder Zusatzbehälter 103,203,303 ist über eine Verbindungsleitung 109,209,309 an die Vorlaufleitung 107,207 bzw. 307 des zugehörigen Wiegemischbehälters 100,200,300 angeschlossen. Aus der Verbraucherleitung 506 mündet im Bereich der Einmündung 503 der Mischleitung 502 eine zum Wiegemischbehälter 100 führende Verbindungsleitung 507 aus, von der je eine Zweigleitung 508,509 zu jedem weiteren Wiegemischbehälter 200,300 bei 510 abzweigt.

Die Mischleitung 502 ist stromab der Einmündungen 501 der Vorlaufleitungen 107,207,307 der Wiegemischbehälter 100,200,300 über eine Verbindungsleitung 511 mit einer Rücklaufleitung 512 verbunden, welche das verbraucherseitige Ende 505 der Verbracherleitung 506 mit einem Zwischenbehälter 600 für die Aufnahme von Verdrängungsflüssigkeit verbindet. Dieser Zwischenbehälter 600 ist seinerseits über Verbindungsleitungen 513,514,515 wahlweise mit einem der Wiegemischbehälter 100,200,300 verbindbar und über eine Zulaufleitung 604 mit Frischwasser beschickbar.

Das der Mischleitung 502 nahe Ende 504 der Verbraucherleitung 506 ist über eine Verbindungsleitung 516 mit Zweigleitungen 517, 518 mit den Vorlaufleitungen 107,207,307 der Wiegemischbehälter 100,200,300 in Bereichen stromauf der Förderpumpen 108,208,308 verbindbar, und eine weitere Verbindungsleitung 519 verbindet das Ende 504 der Verbraucherleitung 506 mit einem Bereich 520 der Verbraucherleitung 506 stromab der Einmündung 503 der Mischleitung 502.

Die Mischleitung 502 ist stromauf eines Steuerventils V502 durch eine Verbindungsleitung 521 mit der Verbraucherleitung 506 nahe deren benachbarten Ende 504 verbindbar.

Die Verbraucherleitung 506 ist mit einer Anzahl von Abzweigungen 530 - 534 zu Verbraucherstellen 540 - 544 versehen und weist zwei Trennkörper 550,560 auf, die in ihrer dargestellten Ausgangsstellung mit ihren einander zugewandten Stirnflächen der Einmündung 503 der Mischleitung 502 dicht benachbart sind.

Zur Ausgangs-Positionserfassung der Trennkörper sind der Verbraucherleitung 506 Positionssensoren 570,580 zugeordnet, die bei ausgangsgemäßer Anordnung der Trennkörper ein Signal an die Schalteinheit geben. Entsprechende Sensoren 590-594 sind auch den Abzweigungen 530-534 derart zugeordnet, das sie ein Signal an die Schalteinheit abgeben, wenn sich der Trennkörper 560 und später auch 550 in einer Position unmittelbar stromab einer Abzweigung befindet.

In den Rohrleitungen der Fütterungseinrichtung sind Steuerventile vorgesehen, die von der Schalteinheit 400 betätigbar sind und je nach Betriebsstellung die Rohrleitungen freigeben oder absperren. Die bevorzugt als elektropneumatische Ventile ausgebildeten Steuerventile haben ein Bezugszeichen, das sich aus dem vorausgestellten Buchstaben V und dem Bezugszeichen für die Rohrleitung, in der sich das Steuerventil befindet, zusammensetzt.

Zur Durchführung eines Fütterungsvorganges - unter dem die Fütterung sämtlicher Tiere, die durch die Fütterungseinrichtung versorgt werden, anläßlich einer Mahlzeit zu verstehen ist - wird von der zentralen Schalteinheit 400 zunächst der Mengenbedarf für jede der zuzubereitenden Vormischungen anhand der für jede Verbraucherstelle vorgegebenen, veränderbaren Daten ermittelt. Danach werden bei einer Fütterungseinrichtung mit nur zwei Wiegemischbehältern 100,200 in diesen die beiden ersten für eine Ausgabe von Futterportionen benötigten Vormischungen unterschiedlicher Rezeptur, die nachfolgend mit A und B bezeichnet werden, zubereitet.

Bei einer Fütterungseinrichtung mit drei Wiegemischbehältern wird im dritten Wiegemischbehälter 300 auch bereits eine Vormischung mit einer dritten Rezeptur zubereitet, die nachfolgend mit C bezeichnet wird. Die Vormischungen A,B,C - und gegebenenfalls später noch zubereitete weitere Vormischungen - sind in der Menge so bemessen, daß alle während eines Fütterungsvorganges abzugebenden Futterportionen, die aus Teilmengen dieser Vormischungen zusammenzusetzen sind, erstellt werden können und nach Erstellung der Futterportionen die Vormischungen gerade vollständig aufgebraucht sind.

Sind nur zwei Wiegemischbehälter 100,200 und dementsprechend die Vormischungen A und B vorhanden, werden aus diesen beiden Vormischungen A,B Futterportionen in der Reihenfolge ihrer späteren Abgabe zu den Verbraucherstellen 540 bis 544 - denen Zahl im Rahmen praktikabler Granzen beliebig gewählt sein kann - einzeln in Menge und Zusammensetzung vollständig fertiggestellt und nacheinander in die Verbraucherleitung 506 überführt. Dabei können Futterportionen gebildet werden, die vollständig aus der Vormischung A oder der Vormischung B oder aus beiden Vormischungen A,B in einem beliebigen Teilmengenverhältnis bestehen.

Für den Fall, daß die Fütterungseinrichtung nur zwei Wiegemischbehälter 100,200 umfaßt und auch Futterportionen zu bilden sind, die aus Vormischungen B und C, C und D, D und E etc. zusammenzusetzen sind, wird nach Aufbrauch der Vormischung A im Wiegemischbehälter 100 in diesem die nächste benötigte Vormischung C angemischt und für diesen Anmischvorgang die Zubereitung und Abgabe von Futterportionen unterbrochen. Danach werden dann Futterportionen gebildet, die vollständig aus der Vormischung C oder aus Teilmengen der Vormischungen B und C in beliebigem Anteilsverhältnis bestehen. Nach Verbrauch der Vormischung B wird im Wiegemischbehälter 200 die gegebenenfalls benötigte nächste Vormischung D angemischt und für diesen Anmischvorgang die Zubereitung von Futterportionen und deren Abgabe erneut unterbrochen. Danach wird dann die Zubereitung von Futterportionen, die vollständig aus der Vormischung D oder aus Teilmengen der Vormischungen C und D bestehen, fortgesetzt.

Auf diese Wiese läßt sich mit nur zwei Wiegmischbehältern eine Multiphasenfütterung verwirklichen, die in der Regel alle praktisch Erfordernisse befreidigt, sofern es möglich ist, durch Zusammensetzung der Vormischungen sicherzustellen, daß die gewünschte Zusammensetzung der Futterportionen durch Vermischen von zur zwei Vormischungsanteilen erzielt werden kann. Kies ist in den meisten Anwendungsfällen erreichbar.
Umfaßt die Fütterungseinrichtung drei Wiegemischbehälter 100, 200, 300 mit den Vormischungen A, B and C, dann werden zunächst alle Futterportionen zubereitet, die aus der Vormischung A bestehen oder einen Anteil der Vormischung A enthalten. Nach Verbrauch der Vormischung A werden alle Futterportionen zubereitet und in die Verbraucherleitung eingespeist, die aus der Vormischung B bestehen oder sich aus Teilmengen der Vormischungen B und C zusammensetzen. Während der Zubereitung von Futterportionen aus den Vormischungen B und/oder C wird in dem geleerten Wiegemischbehälter A bereits die vierte Vormischung D angemischt. Sobald die Menge der Vormischung B verbraucht ist, werden nun Futterportionen aus den Vormischungen C und/oder D zubereitet, während gleichzeitig eine etwa gewünschte fünfte Vormischung E im Wiegemischbehälter 200 zubereitet wird. Auch auf diesem Wege ist eine Multiphasenfütterung durchführbar, bei der Wartezeiten für die Anmischung einer jeweils nächstbenötigten Vormischung vermieden sind.

In Fällen, in denen sich die gewünschten Zusammensetzungen von Futterportionen durch das Vermischen von Anteilen von zwei Vormischungen nicht erreichen lassen, sondern Anteile aus drei oder mehr Vormischungen benötigt werden, um die gewünschte Zusammensetzung von Futterportionen sicherzustellen, kann die Fütterungseinrichtung auch mit so vielen Wiegemischbehältern ausgestattet sein, wie Vormischungen für die Zubereitung von Futterportionen benötigt werden. Es genügt hierzu der Anschluß weiterer Wiegemischbehälter in der Weise, wie sie in der Zeichnung für den Wiegemischbehälter 300 in strichpunktierten Linien veranschaulicht ist.

Eine derartige Ausgestaltung der Fütterungseinrichtung geht zwar mit einem höheren Bauaufwand einher, hat aber dafür den Vorzug, daß die Futterportionen exakt in der Reihenfolge zubereitet werden können, in der die Verbraucherstellen in Strömungsrichtung aufeinanderfolgen. Benötigt hingegen bei einer Ausbildung der Fütterungseinrichtung mit nur zwei Wiegemischbehältern - oder einer die Anzahl der Vormischungen unterschreitenden Anzahl von Wiegemischbehältern - eine in Strömungsrichtung in der Verbraucherleitung weit vorne liegende Verbraucherstelle eine Zusammensetzung der Futterportion, die erst aus Vormischungen einer späteren Zubereitung zubereitet werden kann, dann ist in solchen Fällen ein mehrfacher Durchlauf dergestalt erforderlich, daß alle im ersten Durchlauf an aufeinanderfolgenden Verbraucherstellen ausgebbaren Futterportionen ausgegeben und die Verbraucherleitung 506 entleert wird, und daß danach die beiden Verdrängerkörper in ihre Ausgangsposition an der Einmündung 503 der Mischleitung 502 verbracht werden und mit der erneuten Zubereitung von Futterportionen unter Aufbau einer Futtersäule begonnen wird, die aus den zu diesem Zeitpunkt in den Wiegemischbehältern enthaltenen Vormischungen zusammengesetzt und an in Strömungsrichtung in der Verbraucherleitung 506 hintereinander gelegenen Abzweigstellen 530-534 zur Ausgabe gebracht werden können.

Davon ausgehend, daß in den Wiegemischbehältern 100, 200, 300 Vormischungen A,B und C in der für einen Fütterungsvorgang benötigten Menge zubereitet sind, ferner davon ausgehend, daß das Rohrleitungssystem 500 mit Wasser oder einer sonst geeigneten Verdrängerflüssigkeit gefüllt ist, und schließlich davon ausgehend, daß sich die Trennkörper 550,560 in ihrer dargestellten Ausgangsstellung befinden, läuft ein Fütterungsvorgang mit der dargestellten Fütterungseinrichtung wie folgt ab:

Für die Zubereitung einer Futterportion aus den Vormischungen A, B werden die Ventile V107 und V207 in den Vorlaufleitungen 107,207, das Ventil V502 in der Mischleitung 502 und das Ventil V512 in der Verbindungsleitung 512 zwischen dem Ende 505 der Verbraucherleitung 506 und dem Brauchwasserbehälter 600 geöffnet. Zugleich werden die Förderpumpen 108,208 in Betrieb gesetzt. Diese werden zweckmäßig in Ansahung des gewünschten Anteilsverhältnisses zwischen den Vormischungen A und B, z.B. 70:30, mit Förderleistungen betrieben, die sich zueinander wie das Anteilsverhältnis verhalten. Handelt es sich bei den Förderpumpen 108,208 um frequenzgesteuerte Verdrängerpumpen, bei denen die Förderleistung der Drehzahl zumindest im wesentlichen proportional ist, dann verhalten sich die Drehzahlen der Förderpumpen 108, 208 zueinander wie 70:30 mit der Folge, daß die Pumpen gleichzeitig und im wesentlichen gleich lange laufen können. Die Vorgabe bzw. Regelung der entsprechenden Pumpendrehzahlen erfolgt durch die zentrale Schalteinheit 400, die gleichzeitig über die Gewichtsmessung der Wiegemischbehälter das Gewicht der aus den Wiegemischbehältern 100,200 fortlaufend entnommenen Vormischungsmengen kontrolliert. Ergibt diese Kontrolle, daß die vorgegebene Menge einer der Vormischungen, wie sie für die Zubereitung einer Futterportion vorbestimmt wurde, einem Wiegemischbehälter entnommen ist, wird die zugehörige Förderpumpe abgeschaltet, und es arbeitet lediglich noch die zweite Förderpumpe solange weiter, bis auch von der zweiten Vormischung die vorgegebene Menge aus dem zugehörigen Wiegemischbehälter entnommen ist.

Auf diese Weise tritt in der Mischleitung 502, in der die Mengenströme nach ihrem Zusammenfluß bei 501 in Richtung auf die Verdrängerleitung 506 vorströmen, eine exakte Vermischung der Vormischungsbestandteile ein, und allenfalls am Ende der Zubereitung einer Futterportion befindet sich infolge eines eintretenden Korrekturnachlaufes ein Strangbereich an Futter, der aus nur einer Vormischung besteht. Solche Korrekturmengen sind jedoch hinsichtlich der Exaktheit der Vermischung der Futterbestandteile innerhalb einer Futterportion von vernachlässigbarer Bedeutung.

Mit Beginn der Futterförderung verschiebt sich der Verdrängerkörper 560 in seiner Verbraucherleitung 506 in Richtung zu deren Ende 505 hin, und es erfolgt der Aufbau der Futtersäule aus unmittelbar aneinandergrenzenden Futterportionen, die individuell in Menge und Zusammensetzung zubereitet sind. Das vom Verdrängerkörper 560 verdrängte Wasser der Rohrleitungsvorfüllung strömt in den Brauchwasser-Sammelbehälter 600.

Der Computer der zentralen Schalteinheit 400 erfaßt ständig die in das Rohrleitungssystem übergehende Futtermenge, und da jeder Gewichtseinheit an Futter eine bestimmte Länge an Futtersäule entspricht, liegt der zentralen Schalteinheit 400 eine ständige Information darüber vor, an welcher Stelle sich das Vorlaufende der Futtersäule befindet, welche Längen die den Futterportionen entsprechenden Bereiche der Futtersäule haben und wie diese aufeinanderfolgen. Sobald daher das Vorlaufende der Futtersäule mit der (jeweils) ersten Futterportion jene Abzweigung, z.B. 530, erreicht, an der die Futterportion zuszugeben ist, öffnet die zentrale Schalteinheit 400 das zugehörige Abgabeventil z.B. V530, das solange geöffnet bleibt, bis die gesamte Futterportion, und nur diese, zur Abgabe gelangt ist. Dies kontrolliert die zentrale Schalteinheit 400 über die Summe der Gewichtsveränderungen der Anmischbehälter bei dar Zubereitung von Futterportionen während des Abgabevorganges. Auf diese Weise ist sichergestellt, daß exakt mengenmäßig zubereitete Futterportionen auch exakt zur Abgabe an ihrer Verbraucherstelle gelangt.

Eine zusätzliche Kontrollmöglichkeit ist durch die Positionssensoren 590-594 gegeben, welche ein Signal an die zentrale Schalteinheit 400 geben, sobald die Trennkörper 550, 560 eine bestimmte, signalauslösende Position zu einem Positionssensor erreichen.

Sobald jeweils eine Futterportion entsprechend den programmgemäßen Vorgaben zubereitet ist, beginnt unmittelbar die Zubereitung einer nachfolgenden Futterportion, wobei entsprechend der Vorgabe für die Zusammensetzung dieser Futterportion die Förderpumpen 108,208 auf ein den Anteilen der Vormischung in der Futterportion entsprechendes Drehzahl- bzw. Förderleistungsverhältnis gebracht werden.

Während der Abgabe der jeweils den vorderen Trennkörper 560 benachbarten Futterportion nimmt der Trennkörper 560 eine Lage zur Abzweigung 530-534 ein, bei der die dem Futter zugewandte Stirnfläche des Trennkörpers 560 unmittelbar stromab der Abzweigung 530-534 gelegen ist. Zur Fixierung des Trennkörpers in dieser Stellung wird das Ventil V512 durch die Schalteinheit 400 geschlossen. Dieses Ventil V512 öffnet und schließt jeweils zeitgleich im Wechsel mit dem Schließen bzw. Öffnen eines Ventils in einer Abzweigleitung 530-534. Auslöser für das Schließen des Ventils V512 kann ein Signal eines Positionssensors 590594 sein.

Mit dem Öffnen eines Abgabeventils V530-V534 stoppt der Computer die Aufsummierung des Gewichts des bisher aus den Wiegemischbehältern (100,200,300) ausgeförderten Futters, speichert diesen Wert und beginnt zugleich, das Gewicht des ab dem Öffnen des Abgabeventils bei der Zubereitung einer Futterportion aus den Wiegemischbehältern 100,200,300 ausgeförderten Futters gesondert zu erfassen. Sobald das für die Abgabe einer Futterportion geöffnete Abgabeventil wieder schließt und das Ventil V512 wieder öffnet, nimmt dar Computer der zentralen Schalteinheit 400 die während des Abgabevorganges gestoppte Aufsummierung der aus den Wiegemischbehältern 100,200,300 ausgeförderten Futtermenge wieder auf. Zugleich setzt sich der Verdrängerkörper 560 wieder in Bewegung.

Die Positionserfassung der Verdrängerkörper (550,560) kann eine Kontrollmaßnahme zur Prozeßsteuerung durch das Entnahmegewicht aus den Wiegemischbehältern sein, kann jedoch auch als Hauptsteuergröße herangezogen werden, in welchem Falle nur die Öffnungsdauer eines Abgabeventils über die Gewichtserfassung der Wiegemischbehälter gesteuert wird. An die Stelle der Gewichtsveränderung der Wiegemischbehälter könnte auch eine Zeitgröße als Steuergröße treten.

Sind mehr als zwei Wiegemischbehälter vorhanden, übernimmt der Computer der zentralen Schalteinheit 400 zusätzlich zu den vorbeschriebenen Aufgaben auch noch die Aufgabe, die Anmischung der nächstbenötigten Vormischung auszulösen, zu überwachen und zu steuern.

Wenn die letzte Futterportion unter Verbrauch der Restmenge aus entsprechenden Wiegemischbehältern zubereitet worden ist und sämtliche Wiegemischbehälter 100,200,300 leer sind, werden die Ventile V109,V209 (und gegebenenfalls V309 und weitere) geöffnet und gleichzeitig die Ventile V107, V207 (und gegebenenfalls V307 und weitere) geschlossen mit der Folge, daß nun aus den Frischwasserbehältern 103,203 (und gegebenenfalls weiteren) in die Vorlaufleitung 107,207 (307) einströmmt und von den Förderpumpen 108,208 (308)in die Mischleitung 502 gefördert wird. Durch Schließen des Ventils V502 und Öffnen des Ventils V521 wird das geförderte Frischwasser in einen zwischen dem Ende 504 und dem Trennkörper 550 befindlichen Bereich der Verbraucherleitung 506 gefördert mit der Folge, daß das Wasser den Verdrängerkörper 550 in Förderrichtung in der Verbraucherleitung 506 verdrängt und dadurch die restliche Futtersäule, die sich zwischen den Verdrängerkörpern 550 und 560 befindet, in Förderrichtung weiterbewegt.

Da Frischwasser ein anderes spezifisches Gewicht als Futtermischungen hat, berücksichtigt der Computer der zentralen Schalteinheit 400 diesen Umstand bei der weiteren Gewichtserfassung, steuert aber ansonsten den Abgabevorgang wie zuvor in der Weise, daß an den zugeordneten Verbraucherstellen jeweils die dem vorlaufenden Trennkörper 560 benachbarte Futterportion ausgegeben wird.

Wird bei einer vereinfachten Ausführung der Fütterungseinrichtung nur ein einziger Frischwasserbehälter, z.B. der Behälter 103 auf dem Wiegemischbehälter 100, verwendet, läuft bei Umschaltung auf Frischwasserförderung nur noch die Förderpumpe 108.

Ist die letzte Futterportion an der letzten, ihr zugeordneten Verbraucherstelle zur Abgabe gelangt, befindet sich der erste Trennkörper 560 unmittelbar hinter und der zweite Trennkörper 550 unmittelbar vor der Ausmündung der zugehörigen Abzweigung 530-534. Zur Rückführung der beiden Trennkörper 550,560 in ihre Ausgangsstellung beidseits der Einmündung 503 der Mischleitung 502 werden die Ventile V516 und gegebenenfalls V517, V518 sowie V512 geöffnet und die Ventile V109, V209, V309 und V521 geschlossen. Wird bei dem Rückführungsprozeß der Trennkörper 550,560 nur eine Förderpumpe eingesetzt, z.B. die Förderpumpe 108, bleiben die Ventile V517 bzw. V518 geschlossen.

Zwischen den Trennkörpern befindet sich nach Abschluß des Fütterungsvorganges aus Sicherheitsgründen noch eine geringe Restfuttermenge. Sobald die Verdrängerkörper 550,560 wieder in ihre Ausgangsstellung gemäß Zeichnung zurückgekehrt sind, kann das zwischen den Trennkörpern 550,560 vorhandene Restfutter in einen der Wiegsmischbehälter, z.B. den Wiegemischbehälter 100, gefördert werden. Hierzu werden die Ventile V109 und V507 geöffnet, während das Ventil V516 geschlossen wird.

Wenn beide Trennkörper 550, 560 in ihrer Ausgangsstellung sind, ist auch das Rohrleitungssystem wieder vollständig mit Wasser bzw. Verdrängerflüssigkeit gefüllt. Zur Durchführung eines Spülvorganges können nun beispielsweise das Ventil V109 geschlossen und das Ventil V516 und das Ventil V519 geöffnet werden, das in einer Verbindungsleitung vorgesehen ist, welche einen Bereich der Verbraucherleitung 506 stromab der Ausgangsstellung des Trennkörpers 560 mit dem benachbarten Ende 504 der Verbraucherleitung 506 verbindet.

Während des Fütterungsvorganges in den Brauchwasserbehälter 600 überführte Verdrängungsflüssigkeit kann bei der nachfolgenden Anmischung von Vormischungen als Komponente Verwendung finden. Hierzu kann der Behälter 600 über die Verbindungsleitungen 513, 514 oder 515 mit einem der Wiegemischbehälter 100, 200, 300 durch Öffnen eines der Ventile V513, V514 oder V515 verbunden werden.

Das vorbeschriebene zubereiten von Futterportionen aus Anteilen von Vormischungen genießt sowohl verfahrens- als auch vorrichtungstechnisch den Vorzug, jedoch ist es auch möglich, in den Wiegemischbehältern einzelne Futterportioner entsprechend einer jeweils vorgegebenen Rezeptur nacheinander aus den über die Zuleitungen 105,205,305 herangeförderten Futterbestandteilen zuzubereiten und nach Abschluß einer Portionszubereitung aus den Wiegemischbehältern heraus - und über die Mischleitung 502 in die Verbraucherleitung 506 hineinzufördern. Theoretisch genügt hierfür ein einziger Wiegemischbehälter, wenngleich zwei oder mehr Wiegemischbehälter aus Gründen der Geschwindigkeit der Portionsanmischung bevorzugt ist Bei einer solchen Durchführungsmöglichkeit des Verfahrens genügt es, wenn die Wiegemischbehälter eine Große haben, die der größten einzeln zuzubereitenden Futterportion angepaßt ist.

Da in den meisten Fällen eine gewisse Zeitspanne zwischen dem Anmischvorgang und einer Abgabe einer Futterportion benötigt wird, wird sich eine Durchführung des Verfahrens mit Anmischung von Einzelportionen in einzelnen Wiegemischbehältern auf spezielle Fütterungsbedingungen zu beschränken haben.

## Patentansprüche

1. Verfahren zum Zubereiten und Zuführen von pumpfähigem Viehfutter zu Verbraucherstellen (540-544), bei dem Futtermischungen zubereitet, durch eine Verbraucherleitung (506) mit wahlweise nacheinander freigebbaren Abzweigungen (530-534) zu Verbraucherstellen gefördert und an den Verbraucherstellen Futterportionen abgegeben werden, deren Menge durch eine computergesteuerte elektronische Schalteinheit (400) als zentrale Prozeßsteuerung vorbestimmt wird, wobei in der Verbraucherleitung befindliche Futtersäule durch endseitige Trennkörper (550,560) von einer Verdrängerflüssigkeit getrennt gehalten wird, die entweder vom Vorlaufende der Futtersäule verdrängt wird oder das Nachlaufende der Futtersäule verdrängt, und wobei das Verdrängen von Futter durch Verdrängerflüssigkeit und umgekehrt jeweils durch ein vom Druck zumindest einer in die zentrale Prozeßsteuerung eingebundenen Förderpumpe abgeleitetes hydraulisches Druckgefälle herbeigeführt wird, **dadurch gekennzeichnet,** daß die Futterportionen entsprechend einer vorbestimmten Reihenfolge ihrer Abgabe vor ihrer Förderung zu den ihnen jeweils zugeordneten Verbraucherstellen (540-544) einzeln in Menge und Zusammensetzung vorbestimmt und fertiggestellt werden, die fertigen Futterportionen unter Bildung unmittelbar aneinandergrenzender Längenbereiche der Futtersäule in der Reihenfolge ihrer Fertigstellung in die Verbraucherleitung eingespeist, und ihre Positionen in der Förderleitung auf dem Weg zu den ihnen zugeordneten Verbraucherstellen bis zum Abschluß des Abgabevorgangs durch die zentrale Schalteinheit fortlaufend kontrolliert werden.

2. Verfahren nach Anspruch 1, **dadurch gekennzeichnet,** daß jede Futterportion in einem Wiegemischbehälter (100,200,300) aus ihren vorbestimmten Bestandteilen gesondert zusammengestellt, fertiggemischt und unter Verdrängung der in der Verbraucherleitung (506) befindlichen Futtersäule an diese angeschlossen wird.

3. Verfahren nach Anspruch 1 oder 2, **dadurch gekennzeichnet,** daß mehrere Futterportionen in mehreren Wiegemischbehältern (100,200,300) zumindest phasenweise gleichzeitig zubereitet und nach Fertigstellung nacheinander in vorgegebener Reihenfolge in die Verbraucherleitung (506) gefördert werden.

4. Verfahren nach Anspruch 2 oder 3, **dadurch gekennzeichnet,** daß Wiegemischbehälter (100,200,300) mit einem annähernd auf die Menge einer Futterportion abgestimmten Fassungsvermögen verwendet werden.

5. Verfahren nach Anspruch 1, **dadurch gekennzeichnet,** daß Futtervormischungen unterschiedlicher Grundrezeptur zubereitat und die Futterportionen aus Teilmengen unterschiedlicher Vormischungen zusammengesetzt werden, wobei die Teilmengen für jede Futterportion fortschreitend und dabei zumindest phasenweise gleichzeitig den jeweiligen Vormischungen entnommen und in einer Mischleitung (502) zusammengeführt werden, die in die Verbraucherleitung (506) mündet.

6. Verfahren nach Anspruch 5, **dadurch gekennzeichnet,** daß die für die Futterportion vorbestimmten Teilmengen der Futtervormischungen in Förderströmen in die Mischleitung eingespeist werden, deren Mengenverhältnis dem Mischungsverhältnis in der fertiggestellten Futterportion entspricht.

7. Verfahren nach Anspruch 6, **dadurch gekennzeichnet,** daß die Entrahme der Teilmengen aus den Futtervormischungen durch fortlaufende Erfassung der Vormischungsgewichte kontrolliert und bei erreichen eines Vorgabewertes beendet wird.

8. Verfahren nach einem der Ansprüche 5 bis 7, **dadurch gekennzeichnet,** daß die für den Einsatz bei einem Fütterungsvorgang vorgesehenen Vormischungen zumindest phasenweise gleichzeitig und in der für einen Fütterungsvorgang benötigten Menge zubereitet und für die Entnahme von Teilmengen bis zu ihrem Aufbrauch vorgehalten werden.

9. Verfahren nach einem der Ansprüche 5 bis 8, **dadurch gekennzeichnet,** daß von den für einen Einsatz bei einem Fütterungsvorgang vorgesehenen Vormischungen lediglich zwei zumindest phasenweise gleichzeitig zubereitet und für eine Entnahme von Teilmengen vorgehalten werden, und daß weitere Vormischungen phasenweise versetzt jeweils nach Aufbrauch der einen Vormischung zubereitet und zusammen mit dem noch unverbrauchten Teil der anderen Vormischung oder nach deren Aufbrauch mit einer nachfolgend zubereiteten Vormischung zur Futterportionsbildung herangezogen wird.

10. Verfahren nach einem der Ansprüche 5 bis 9, **dadurch gekennzeichnet,** daß Wiegemischbehälter (100,200,300) mit einem Fassungsvermögen verwendet werden, das der Menge der größten während eines Fütterungsvorgangs benötigten Vormischung entspricht.

11. Verfahren nach einem der Ansprüche 5 bis 10, **dadurch gekennzeichnet,** daß innerhalb eines Fütterungsvorganges die Zubereitung von Futterportionen unterbrochen wird, die in der Futtersäule noch enthaltenen Futterportionen abgegeben werden, die Trennkörper (550,560) in ihre Ausgangsstellung zu Beginn eines Aufbaus einer Futtersäule in der Verbraucherleitung (506) zurückgeführt werden und anschließend der Fütterungsvorgang durch Wiederaufnahme der Zubereitung von Futterportionen und deren Einspeisung in die Verbraucherleitung (506) fortgesetzt wird.

12. Fütterungseinrichtung zum Zubereiten und Zuführen von pumpfähigem Viehfutter zu Verbraucherstellen (540-544), bestehend aus einer Futterzubereitungsstation und aus einem an diese angeschlossenen, ventilgesteuerten Rohrleitungssystem (500), wobei die Zubereitungsstation
- zumindest zwei Wiegemischbehälter (100,200,300), die mit unterschiedlichen Futterbestandteilen beschickbar sind sowie ein Rührwerk (101,201,301) und einen Bodenauslauf (102,202,302,) aufweisen, und
- einen jedem Wiegemischbehälter (100,200,300) fest zugeordneten, mitverwogenen Zusatzbehälter (103,203,303) umfaßt, wobei das Rohrleitungssystem (500)
- Zuleitungen (104,204,304;105,205,305) für Frischwasser, für feste und für flüssige Futterbestandteile zu dem Wiegemischbehältern (100,200,300) und zu den Zusatzbehältern (103,203,303),
- eine Verbraucherleitung (506), die mit einer Anzahl von Abzweigungen (530-534) zu Verbraucherstellen (540-544) versehen ist,
- Vorlaufleitungen (107,207,307) mit diesen zugeordneten Förderpumpen (108,208,308), die an den Auslaß der Wiegemischbehälter (100,200,300) angeschlossen sind, und
- eine Verbindungsleitung (512) aufweist, über die die Verbraucherleitung (506) mit einem in die Wiegemischbehälter (100,200,300) entleerbaren Zwischenbehälter (600) für Verdrängungsflüssigkeit verbindbar ist,
und wobei eine computergesteuerte zentrale Schalteinheit (400) für die Steuerung sämtlicher Aggregate der Fütterungseinrichtung vorgesehen und an Meßwertaufnehmer für eine Programmsteuerung der Fütterungseinrichtung angeschlossen ist, **dadurch gekennzeichnet,** daß die Vorlaufleitungen (107,207,307) sämtlicher Wiegemischbehälter (100,200,300) in eine Mischleitung (502) münden, die an die Verbraucherleitung (506) angeschlossen ist.

13. Fütterungseinrichtung nach Anspruch 12, **dadurch gekennzeichnet,** daß die in den Vorlaufleitungen (107,207,307) der Wiegemischbehälter (100,200,300) vorgesehenen Förderpumpen (108,208,308) mit einer dem Anteil der jeweils von ihnen geförderten Vormischung in den Futterportionen zumindest annähernd entsprechenden Förderleistung betreibbar sind.

14. Fütterungseinrichtung nach Anspruch 13, **dadurch gekennzeichnet,** daß die Förderpumpen (108,208,308) als frequenzsteuerbare Verdrängerpumpen mit zu ihrer Drehzahl proportionaler Förderleistung ausgebildet sind.

15. Fütterungseinrichtung nach Anspruch 13, **dadurch gekennzeichnet,** daß als Förderpumpen (108,208,308) Zentrifugalpumpen mit nachgeordnetem steuerbarem Drosselventil vorgesehen sind.

16. Fütterungseinrichtung nach einen der Ansprüche 12 bis 15, **dadurch gekennzeichnet,** daß sämtliche Vorlaufleitungen (107,207,307) der Wiegemischbehälter (100,200,300) an einer gemeinsamen Mündungsstelle (501) in die Mischleitung (502) einmünden.

17. Fütterungseinrichtung nach einem der Ansprüche 12 bis 16, **dadurch gekennzeichnet,** daß die Mischleitung (502) stromab der Einmündungen (501) der Vorlaufleitungen der Wiegemischbehälter (100,200,300) über eine Verbindungsleitung (511) an die zum Zwischenbehälter (600) für Verdrängungsflüssigkeit führenden Verbindungsleitung (512) anschließbar und der Zwischenbehälter seinerseits über Verbindungsleitungen (513,514,515) mit den Wiegemischbehältern (100,200,300) verbindbar ist.

18. Fütterungeinrichtung nach einem der Ansprüche 12 bis 17, **dadurch gekennzeichnet,** daß aus der Verbraucherleitung (506) im Bereich der Einmündung (503) der Mischleitung (502) eine zu einem Wiegemischbehälter (100) führende Verbindungsleitung (507) ausmündet, von der je eine Zweigleitung (508,509) zu jedem weiteren Wiegemischbehälter (200,300) abzweigt.

19. Fütterungseinrichtung nach einem der Ansprüche 12 bis 18, **dadurch gekennzeichnet,** daß zwischen dem Zusatzbehälter (103,203,303) und der Vorlaufleitung (107,207,307) jedes Wiegemischbehälters (100,200,300) eine Verbindungsleitung (109,209,309) vorgesehen ist, die in die Vorlaufleitung (107,207,307) stromauf der Förderpumpe (108,208,308) einmündet.

20. Fütterungseinrichtung nach einem der Ansprüche 12 bis 19, **dadurch gekennzeichnet,** daß das der Mischleitung (502) benachbarte Ende (504) der Verbraucherleitung (506) über eine Verbindungsleitung (516) und Zweigleitungen (517,518) mit den Vorlaufleitungen (107,207,307) der Wiegemischbehälter (100,200,300) im Bereich stromauf der Förderpumpen (108,208,308) verbindbar ist.

21. Fütterungseinrichtung nach einem der Ansprüche 12 bis 20, dadurch gekennzeichnet, daß das der Mischleitung (502) benachbarte Ende (504) der Verbraucherleitung (506) über eine Verbindungsleitung (519) mit der Verbraucherleitung (506) stromab der Einmündung (503) der Mischleitung (502) verbindbar ist.

22. Fütterungseinrichtung nach einem der Ansprüche 12 bis 21, **dadurch gekennzeichnet,** daß die Mischleitung (502) stromauf eines Steuerventils (V 502) durch eine Verbindungsleitung (521) mit der Verbraucherleitung (506) nahe deren benachbarten Ende (504) verbindbar ist.

## Claims

1. A method of preparing and feeding pumpable cattle feed to consumer stations (540-544) in which feed mixtures are prepared, passed through a consumer line (506) with optionally serially openable branches (530-534) to consumer stations ,feed portions being delivered at the consumer stations, the quantity of which is predetermined by a computer-controlled electronic switching unit (400) as a central process control arrangement, whereby the column of feed present in the consumer line is kept separate from a displacing fluid by separating members (550, 560) situated at its ends, the displacement fluid being displaced either from the forward run end of the feed column or displaces the tail end of the feed column and whereby the displacement of feed by displacing fluid and vice versa is accomplished by a hydraulic pressure gradient derived from the pressure of at least one delivery pump which is linked into the central process control, characterised in that the feed portions are in accordance with a predetermined sequence in which they are dispensed, individually predetermined and made up in quantity and composition before being delivered to the consumer stations (540-544) associated with them, the prepared feed portions, while forming directly adjacent portions of the length of the feed column being fed into the consumer line in the sequence in which they are prepared and their positions in the conveyor line on the way to the consumer stations associated with them being continuously monitored by the central switching unit until the dispensing process is completed.

2. A method according to Claim 1, characterised in that in a weighing-mixing container (100, 200, 300), each feed portion is assembled separately from its predetermined constituent parts, is ready mixed and connected to the feed column by a displacement of the feed column which is present in the consumer line (506).

3. A method according to Claim 1 to 2, characterised in that a plurality of feed portions are at least phase-wisely simultaneously prepared in a plurality of weighing-mixing containers (100, 200, 300) and, when they are complete, are conveyed one after another in a predetermined sequence into the consumer line (506).

4. A method according to Claim 2 or 3, characterised in that weighing-mixing containers (100, 200, 300) are used which have a capacity approximately matched to the quantity of a feed portion.

5. A method according to Claim 1, characterised in that feed mixtures to a different basic recipe are prepared and the feed portions assembled from partial quantities of different pre-mixtures, the partial quantities for each feed portion being progressively and at the same time at least phase-wisely simultaneously taken from the respective pre-mixtures and blended in a mixing pipe (502) which opens out into the consumer line (506).

6. A method according to Claim 5, characterised in that the partial quantities of feed pre-mixtures predetermined for the feed portion are fed in conveyor streams into the mixing pipe, the proportions corresponding to the mixing proportion in the completed feed portion.

7. A method according to Claim 6, characterised in that withdrawal of the partial quantities from the feed pre-mixtures is monitored by continuous ascertainment of the weights of pre-mixture and terminated when a predetermined amount is reached.

8. A method according to one of Claims 5 to 7, characterised in that the pre-mixtures envisaged for use in one feeding operation are at least phase-wisely simultaneously prepared in the quantity required for a feeding operation and are held ready for the withdrawal of partial quantities until used up.

9. A method according to one of Claims 5 to 8, characterised in that of the pre-mixtures envisaged for use in one feeding operation only two are at least phase-wisely simultaneously prepared and held available for removal of partial quantities and in that further pre-mixtures are in phase-wisely staggered fashion prepared after one pre-mixture has been used up and is used together with the still unconsumed part of the other pre-mixture or after this latter has been consumed, together with a subsequently prepared pre-mixture in order to form feed portions.

10. A method according to one of Claims 5 to 9, characterised in that weighing-mixing containers (100, 200, 300) are used which have a capacity corresponding to the quantity of the largest pre-mixture required during one feeding operation.

11. A method according to one of Claims 5 to 10, characterised in that within one feeding operation the preparation of feed portions is interrupted, the feed portions still contained in the feed column are delivered, the separating members (550, 560) are returned to their starting position at the commencement of formation of a feed column in the consumer line (506) and then the feeding operation is continued by resumption of the preparation of feed portions and their introduction in to the consumer line (506).

12. A feeding apparatus for preparing and delivering pumpable cattle feed to consumer stations (540-544), consisting of a feed preparation station and connected to this a valve-controlled pipeline system (500), whereby the preparation station comprises at least two weighing-mixing containers (100, 200, 300) which can be filled with different feed constituents and which have a stirring mechanism (101, 201, 301) and a bottom discharge (102, 202, 302) and permanently associated with each weighing-mixing container (100, 200, 300) a jointly weighed additional container (103, 203, 303), the pipeline system (500) comprising supply pipes (104, 204, 304; 105, 205, 305) for fresh water, for solid and liquid feed components leading to the weighing-mixing containers (100, 200, 300) and to the auxiliary containers (103, 203, 303), a consumer line (506) provided with a number of branches (530-534) to consumer stations (540-544), forward run pipes (107, 207, 307) with, associated with them, conveyor pumps (108, 208, 308) which are connected to the outlet from the weighing-mixing containers (100, 200, 300) and having a connecting pipe (512) by which the consumer line (506) can be connected to an intermediate container (600) for displacement fluid and capable of being emptied into the weighing-mixing containers (100, 200, 300) and whereby a computer-controlled central switching unit (400) is provided for controlling all the units in the feeding apparatus and is connected to transducers for programme-control of the feeding apparatus, characterised in that the forward run pipes (107, 207, 307) of all the weighing-mixing containers (100, 200, 300) terminate at a mixing pipe (502) which is connected to the consumer line (506).

13. A feeding apparatus according to Claim 12, characterised in that the delivery pumps (108, 208, 308) provided in the forward run pipes (107, 207, 307) of the weighing-mixing containers 9100, 200, 300) can be operated at a delivery rate corresponding at least approximately to the proportion of the pre-mixture which they convey to the feed portions.

14. A feeding apparatus according to Claim 13, characterised in that the delivery pumps (108, 208, 308) are constructed as frequency-controllable displacement pumps with a delivery rate proportional to their rotary speed.

15. A feeding apparatus according to Claim 13, characterised in that the delivery pumps (108, 208, 308) provided are centrifugal pumps with a controllable throttle valve on their downstream side.

16. A feeding apparatus according to one of Claims 12 to 15, characterised in that all forward run pipes (107, 207, 307) of the weighing-mixing containers (100, 200, 300) discharge into the mixing pipe (502) at a common discharge point (501).

17. A feeding apparatus according to one of Claims 12 to 16, characterised in that downstream of the discharge points (501) of the forward run pipes of the weighing-mixing containers (100, 200, 300), the mixing pipe (502) can be connected by a connecting pipe (511) to the connecting pipe (512) leading to the intermediate container (600) for displacing fluid while the intermediate container in turn can be connecting to the weighing-mixing containers (100, 200, 300) by connecting pipes (513, 514, 515).

18. A feeding apparatus according to one of Claims 12 to 17, characterised in that from the consumer line (506), in the region of the point (503) at which the mixing pipe (502) joints it, a connecting pipe (507) emerges, leading to a weighing-mixing container (100) and in that a branch pipe (508, 509) branches off the connecting pipe (507) and leads to each further weighing-mixing container (200, 300).

19. A feeding apparatus according to one of Claims 12 to 18, characterised in that between the auxiliary container (103, 203, 303) and the forward run pipe (107, 207, 307) of each weighing-mixing container (100, 200, 300) there is a connecting pipe (109, 209, 309) which opens out into the forward run pipe (107, 207, 307) upstream of the delivery pump (108, 208, 308).

20. A feeding apparatus according to one of Claims 12 to 19, characterised in that the end (504) of the consumer line (506) adjacent the mixing pipe (502) can be connected by a connecting pipe (516) and branch pipes (517, 518) to the forward run pipes (107, 207, 307) of the weighing-mixing containers (100, 200, 300) in the region upstream of the delivery pumps (108, 208, 308).

21. A feeding apparatus according to one of Claims 12 to 20, characterised in that the end (504) of the consumer line (506) adjacent the mixing pipe (502) can be connected by a connecting pipe (519) to the consumer line (506) downstream of the entry (503) of the mixing pipe (502).

22. A feeding apparatus according to one of Claims 12 to 21, characterised in that the mixing pipe (502) can be connected upstream of a control valve (V 502) by a connecting pipe (521) to the consumer line (506) close to its adjacent end (504).

## Revendications

1. Procédé de préparation et d'amenée d'aliments pour animaux, aptes à être pompés, à des endroits de consommation (540 à 544), procédé au cours duquel des mélanges d'aliments pour animaux sont préparés, acheminés à des endroits de consommation au moyen d'une conduite de consommation (506) présentant des branchements (530 à 534) ouvrables les uns à la suite des autres à volonté, et des portions d'aliments pour animaux sont fournies aux endroits de consommation, portions dont la quantité massique est prédéterminée au moyen d'une unité de commutation électronique (400) commandée par ordinateur, faisant office de commande de processus centrale, la colonne d'aliments pour animaux se trouvant dans la conduite de consommation étant maintenue séparée, au moyen de corps de séparation d'about (550, 560), d'un liquide de refoulement, refoulé depuis l'extrémité avant de la colonne d'aliments ou depuis l'extrémité arrière de la colonne d'aliments, et le déplacement des aliments pour animaux à l'intervention du liquide de refoulement et inversement, étant chaque fois provoqué au moyen d'une chute de pression hydraulique, dérivée de la pression issue d'au moins une pompe de transfert intégrée dans la commande de processus centrale, caractérisé en ce que les portions d'aliments sont prédéterminées et façonnées individuellement, en quantité et en composition, en fonction d'un ordre de succession prédéterminé de leur fourniture, ceci avant leur transfert aux endroits de consommation (540 à 544) qui leur sont chaque fois associés, les portions d'aliments pour animaux terminées étant injectées dans la conduite de consommation en constituant des domaines de longueurs directement contigus les uns aux autres, de la colonne d'aliments pour animaux, dans l'ordre de succession de leur fabrication, et leurs positions dans la conduite de transfert, sur le chemin allant aux endroits de consommation qui leur sont associés, étant contrôlées de façon continue jusqu'au terme du processus de fourniture, au moyen de l'unité de commutation centrale.

2. Procédé selon revendication 1, caractérisé en ce que chaque portion d'aliments pour animaux est composée séparément dans un récipient mélangeur-peseur (100, 200, 300), à partir de ses composants prédéterminés, puis est mélangée jusqu'au degré de mélange final et, tout en refoulant la colonne d'aliments pour animaux se trouvant dans la conduite de consommation (506), est ajoutée à cette colonne d'aliments pour animaux.

3. Procédé selon la revendication 1 ou 2, caractérisé en ce que plusieurs portions d'aliments pour animaux sont préparées simultanément, au moins par phases, dans plusieurs récipients mélangeurs-peseurs (100, 200, 300) et sont acheminées une fois leur préparation terminée, les unes à la suite des autres, dans un ordre de succession prédéterminé, dans la conduite de consommation (506).

4. Procédé selon la revendication 2 ou 3, caractérisé en ce que l'on utilise des récipients mélangeurs-peseurs (100, 200, 300) ayant une contenance adaptée approximativement à la quantité massique d'une portion d'aliments pour animaux.

5. Procédé selon la revendication 1, caractérisé en ce que des prémélanges d'aliments pour animaux, répondant à des recettes différentes, sont préparés et les portions d'aliments pour animaux sont composées de quantités partielles de différents prémélanges, étant entendu que les quantités partielles pour chaque portion d'aliments pour animaux seront prélevées progressivement et en l'occurence, au moins par phases, simultanément, des prémélanges respectifs, et sont réunies dans une conduite de mélange (502) qui s'ouvre dans la conduite de consommation (506).

6. Procédé selon la revendication 5, caractérisé en ce que les quantités partielles, prédéterminées pour constituer une portion d'aliments pour animaux des prémélanges d'aliments pour animaux, sont injectées dans des courants de transfert passant dans la conduite de mélange, dont les proportions en quantité massique correspondent aux proportions de mélange dans la portion d'aliments pour animaux à l'état terminé.

7. Procédé selon la revendication 6, caractérisé en ce que le prélèvement des quantités partielles des prémélanges d'aliments pour animaux est contrôlé par détection continue des poids de prémélange et cesse lorsqu'une valeur prédéterminée est atteinte.

8. Procédé selon l'une quelconque des revendications 5 à 7, caractérisé en ce que les prémélanges prévus pour une utilisation dans une opération d'alimentation animale sont préparés, au moins par phases, simultanément et en la quantité massique nécessaire pour une opération d'alimentation animale, et préstockés jusqu'à leur consommation, en vue du prélèvement de quantités partielles.

9. Procédé selon l'une quelconque des revendications 5 à 8, caractérisé en ce que, parmi les prémélanges prévus pour une utilisation dans une opération d'alimentation animale, seuls deux prémélanges sont préparés simultanément, au moins par phases, et sont préstockés en vue d'un prélèvement de quantités partielles, et que d'autres prémélanges sont préparés par phases, de façon temporellement décalée, chaque fois après épuisement d'un premier prémélange, et sont utilisés pour constituer des portions d'aliments pour animaux, conjointement avec la partie non encore consommée de l'autre prémélange ou bien, après sa consommation, avec un prémélange ayant été préparé subséquemment.

10. Procédé selon l'une quelconque des revendications 5 à 9, caractérisé en ce que des récipients mélangeurs-peseurs (100, 200, 300) d'une contenance correspondant à la quantité maximale de prémélange nécessaire pendant une opération d'alimentation animale.

11. Procédé selon l'une quelconque des revendications 5 à 10, caractérisé en ce que, au cours d'une opération d'alimentation animale, la préparation de portions d'aliments pour animaux est interrompue, les portions d'aliments pour animaux encore contenues dans la colonne d'aliments sont distribuées, les corps de séparation (550, 560) sont ramenés à la position initiale qu'ils occupaient au début de la constitution d'une colonne d'aliments dans la conduite de consommation (506), puis le processus d'alimentation des animaux est poursuivi par reprise de la préparation de portions d'aliments et de leur injection dans la conduite de consommation (506).

12. Dispositif d'alimentation pour animaux pour la préparation et l'amenée d'aliments pour animaux, aptes à être pompés, à des endroits de consommation (540 à 544) composés d'un poste de préparation d'aliments pour animaux et d'un système de tuyauterie (500), commandé par des valves et raccordé à ce poste, le poste de préparation comportant :
- au moins deux récipients mélangeurs-peseurs (100, 200, 300) pouvant être alimentés de composants d'aliments pour animaux différents ainsi qu'un agitateur (101, 201, 301) et une évacuation de fond (102, 202, 302), et
- un récipient supplémentaire (103, 203, 303), associé à demeure à chaque récipient mélangeur-peseur (100, 200, 300) et pesé conjointement avec lui, le système de tuyauterie (500) comprenant :
- des conduites d'arrivée (104, 204, 304; 105, 205, 305) pour de l'eau d'appoint, pour les constituants solides et liquides des aliments pour animaux, aboutissant aux récipients mélangeurs-peseurs et aux récipients additionnels (103, 203, 303);
- une conduite de consommation (506), pourvue d'un nombre déterminé de branchements (530 à 534) allant à des endroits de consommation (540 à 544);
- des conduites d'amenée (107, 207, 307), chacune avec leur pompe de transfert (108, 208, 308) associée et raccordée à l'évacuation des récipients mélangeurs-peseurs (100, 200, 300);
- une conduite de liaison (512), par l'intermédiaire de laquelle la conduite de consommation (506) peut être reliée à un récipient intermédiaire (600) destiné à un liquide de refoulement, et pouvant être vidé dans les récipients mélangeurs-peseurs (100, 200, 300), et
- une unité de commutation centrale (400), commandée par ordinateur, destinée à la commande de l'ensemble des groupes du dispositif d'alimentation pour animaux, étant prévue et raccordée à des capteurs de mesure, en vue d'assurer une commande programmée du dispositif d'alimentation pour animaux, caractérisé en ce que les conduites d'amenée (107, 207, 307) de l'ensemble des récipients mélangeurs-peseurs (100, 200, 300) s'ouvrent dans une conduite de mélange (502) raccordée à la conduite de consommation (506).

13. Dispositif d'alimentation pour animaux selon la revendication 12, caractérisé en ce que les pompes de transfert (108, 208, 308) prévues dans les conduites d'amenée (107, 207, 307) des récipients mélangeurs-peseurs (100, 200, 300) sont susceptibles de fonctionner à une puissance de refoulement correspondant au moins approximativement à la fraction du prémélange qu'elles débitent chacune dans les portions d'aliments pour animaux.

14. Dispositif d'alimentation pour animaux selon la revendication 13, caractérisé en ce que les pompes de transfert (108, 208, 308) sont conçues sous forme de pompes volumétriques, pouvant être pilotées par la fréquence, avec une puissance de refoulement proportionnelle à leur vitesse de rotation.

15. Dispositif d'alimentation pour animaux selon la revendication 13, caractérisé en ce que les pompes de transfert (108, 208, 308) sont des pompes centrifuges, équipées d'une soupape d'étranglement pouvant être commandée et montée en aval.

16. Dispositif d'alimentation pour animaux selon l'une quelconque des revendications 12 à 15, caractérisé en ce que toutes les conduites d'amenée (107, 207, 307) des récipients mélangeurs-peseurs (100, 200, 300) s'ouvrent dans un orifice (501) commun dans la conduite de mélange (502).

17. Dispositif d'alimentation pour animaux selon l'une quelconque des revendications 12 à 16, caractérisé en ce que la conduite de mélange (502) peut être raccordée, en aval des orifices (501) des conduites d'amenée des récipients mélangeurs-peseurs (100, 200, 300), par l'intermédiaire d'une conduite de liaison (511), à la conduite de liaison (512) menant au récipient intermédiaire (600) destiné au liquide de refoulement et le récipient intermédiaire peut, de son côté, être raccordé aux récipients mélangeurs-peseurs (100, 200, 300), par des conduites de liaison (513, 514, 515).

18. Dispositif d'alimentation pour animaux selon l'une quelconque des revendications 12 à 17, caractérisé en ce que de la conduite de consommation (506), dans le domaine de la jonction de la conduite de mélange (502), part une conduite de liaison (507) menant à un récipient mélangeur-peseur (100), des conduites de branchement (508, 509) partant de la conduite (507) et menant chacune à un autre récipient mélangeur-peseur (200, 300).

19. Dispositif d'alimentation pour animaux selon l'une quelconque des revendications 12 à 18, caractérisé en ce qu'entre les récipients additionnels (103, 203, 303) et la conduite d'amenée (107, 207, 307) de chaque récipient mélangeur-peseur (100, 200, 300) est prévue une conduite de liaison (109, 209, 309) s'ouvrant dans la conduite d'amenée (107, 207, 307), en amont de la pompe de transfert (108, 208, 308).

20. Dispositif d'alimentation pour animaux selon l'une quelconque des revendications 12 à 19, caractérisé en ce que l'extrémité (504), de la conduite de consommation (506) voisine de la conduite de mélange (502), peut être raccordée, par l'intermédiaire d'une conduite de liaison (516) et de conduites de branchement (517, 518), aux conduites d'amenée (107, 207, 307) des récipients mélangeurs-peseurs (100, 200, 300), dans le domaine situé en amont des pompes de transfert (108, 208, 308).

21. Dispositif d'alimentation pour animaux selon l'une quelconque des revendications 12 à 20, caractérisé en ce que l'extrémité (504) de la conduite de consommation (506), voisine de la conduite de mélange (502), peut être raccordée, par l'intermédiaire d'une conduite de liaison (519), à la conduite de consommation (506), en aval de la jonction (503) de la conduite de mélange (502).

22. Dispositif d'alimentation pour animaux selon l'une quelconque des revendications 12 à 21, caractérisé en ce que la conduite de mélange (502) peut être reliée, en amont d'une soupape de commande (V 502), par une conduite de liaison (521), à la conduite de consommation (506), à proximité de son extrémité voisine (504).
